# EUROPÄISCHE PATENTSCHRIFT

(11) **EP 0 918 016 B1**
(45) Veröffentlichungstag und Bekanntmachung des Hinweises auf die Patenterteilung: **08.10.2003**
(21) Anmeldenummer: 98120802.8
(22) Anmeldetag: 03.11.1998
(51) Int. Cl.: B65B 21/12, B65B 57/02

(54) **Gefässumsetzmaschine**
Machine for transferring containers
Machine de transfert de récipients

(30) Priorität: 18.11.1997 DE 29720413 U
(43) Veröffentlichungstag der Anmeldung: 26.05.1999
(73) Patentinhaber: KHS Maschinen- und Anlagenbau Aktiengesellschaft, 44143 Dortmund (DE)
(72) Erfinder: Purper, Gunther, 55593 Rüdesheim (DE)

(56) Entgegenhaltungen:
- DE-A- 3 621 976
- DE-A- 3 909 865
- DE-A- 4 234 768
- DE-A- 4 442 035

## Beschreibung

Die Neuerung bezieht sich auf eine Gefäßumsetzmaschine, wie Ein- und Auspackmaschine für Flaschen mit einem oder mehreren Greiferköpfen, an denen mit Greifereinheiten ausgestattete Greifertulpen zum Erfassen der einzelnen Flaschen angeordnet sind, sowie mit einem Taststift.

Greiferanordnungen für Flaschen an einem Kastenauspacker mit einem einen Anschluß für eine Druckluftzuführung aufweisenden Halter und mit einem an diesem angebrachten Sortiergreifer, der ein Gehäuse, eine in diesem festgeklemmte, topfförmige und aufblähbar angeordnete Manschette und einen axial verschiebbar angebrachten, mit einem Prüfstift versehenen Taster aufweist, sind bekannt. Hierbei ist eine mit dem Taster verbundene Druckluftsteuereinrichtung derart ausgebildet, daß sie beim Verschieben des Tasters nach oben einen Luftdurchlaß schließt und diesen selbstätig wieder öffnet (DE-Gbm 1730040).

Es ist ferner eine Vorrichtung zum Aussortieren von Flaschen mit Enghalsbohrung im Anschluß an den Herstellungsprozess mit einem in die Flaschenöffnung einführbaren Tastorgan bekannt geworden (DE-OS 2224020). Beim Schließen von Entnahmezungen wird bei dieser Vorrichtung das in seinem Durchmesser der Flaschenöffnung angepaßte Tastorgan in die Halsbohrung der Flaschen eingeführt, so daß ohne Zeitverlust einwandfrei überprüft werden kann, ob die Halsbohrung den gewünschten Abmessungen entspricht. Wenn dies der Fall ist, kann das Tastorgan ohne weiteres in den Flaschenhals eindringen, während die Entnahmezungen die Flasche ergreifen und aus der Fertigform herausheben. Wenn jedoch die Halsbohrung zu eng oder sonstwie verformt ist, kann das Tastorgan nicht in den Flaschenhals eindringen, sondern wird beim Schließen der Zungen gegenüber denselben nach oben gedrückt, wodurch eine mit dem Tastorgan verbundene Einrichtung betätigt wird, welche die Flasche nach dem Absetzen auf dem Abnahmeförderer als Ausschuß aussortiert. Das Tastorgan besteht zweckmäßigerweise aus einem Plunger mit einem um einen Bruchteil geringeren Durchmesser gegenüber dem Mindestdurchmesser einer korrekt geformten Halsbohrung an der Flasche, wobei dieser Plunger beim Schließen der Entnahmezungen um den Flaschenhals in diesen einführbar ist. Wenn der Flaschenhals zu eng oder aus irgendwelchen Gründen vollkommen geschlossen ist, kann sich das Tastorgan relativ zu den geschlossenen Entnahmezungen bewegen.

Gegenüber diesem bekannten Stand der Technik liegt der Neuerung die Aufgabe zugrunde, bei einer Gefäßumsatzmaschine festzustellen, ob alle Flaschen ergriffen sind oder nicht. Gleichzeitig soll unmittelbar angezeigt werden, an welchem Greiferkopf bzw. in welchem Kasten sich die nicht ergriffene oder fehlende Flasche befindet, so daß ohne große Sucharbeiten der betreffende Kasten mit der fehlenden Flasche ergänzt werden kann.

Diese Aufgabe wird bei einer Gefäßumsatzmaschine wie Ein- und Auspackmaschine für Flaschen der eingangs genannten Art dadurch gelöst, daß die Greifertulpen einen höhenbeweglichen Taststift aufweisen und diesem ein Sensor zugeordnet ist, dessen Signale auf eine zentrale Steuereinheit einwirken, die den höhenmäßigen Zustand der einzelnen Taststifte ermittelt und entsprechende Veränderungen des höhenmäßigen Zustandes der einzelnen Taststifte anzeigt.

In eigenständiger Weiterbildung der Gefäßumsetzmaschine gemäß Oberbegriff des Anspruchs 1 wird vorgeschlagen, daß der Taststift eine Abtastfläche aufweist, die mit einem im Gehäuse und/oder Greiferkopf angebrachten Sensor durch die umzusetzenden Flaschen in Verbindung bringbar ist.

Dabei hat sich als zweckmäßig erwiesen, daß der Taststift in axialer Richtung gegen Federkraft im Gehäuse beweglich gelagert ist und einen Steuerring aufweist, der in seiner oberen Position auf einen im Gehäusebereich angeordneten Sensor einwirkt.

Mit der neuerungsgemäßen Ausbildung ist es möglich, jeden einzelnen Greiferkopf bzw. jede einzelne Greifertulpe ständig zu überwachen und ihren Belegungszustand anzuzeigen, wobei unmittelbar auch der Ort einer fehlenden Flasche festgestellt und angezeigt werden kann. Ebenfalls können automatisch unterschiedliche Flaschenhöhen ermittelt werden.

Im nachfolgenden wird die Neuerung anhand eines in der Zeichnung dargestellten Ausführungsbeispiels näher erläutert.

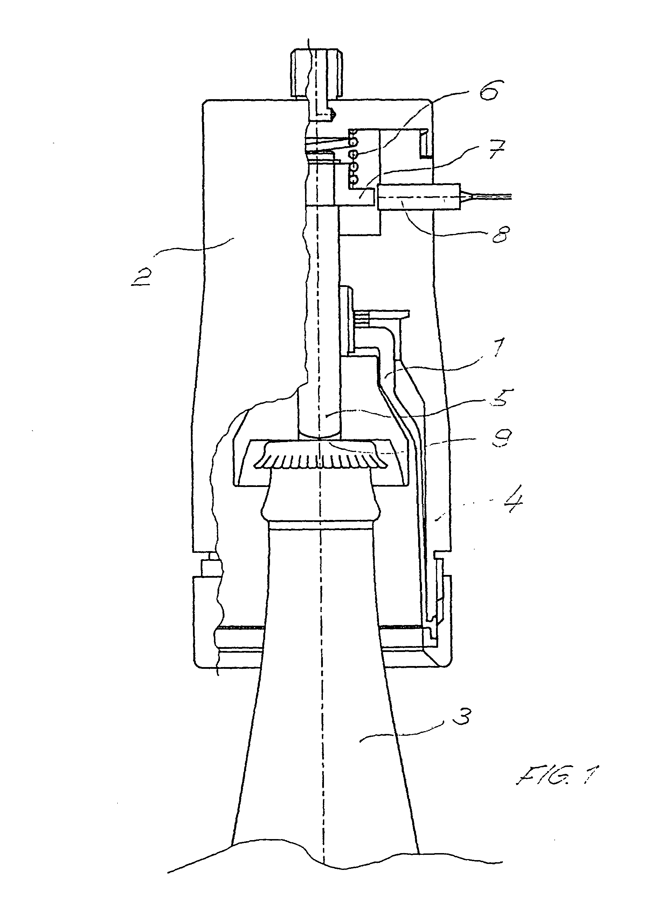

In der Zeichnung zeigt
Figur 1 die Greifertulpe in abgesenkter Position mit einer darin befindlichen Flasche und

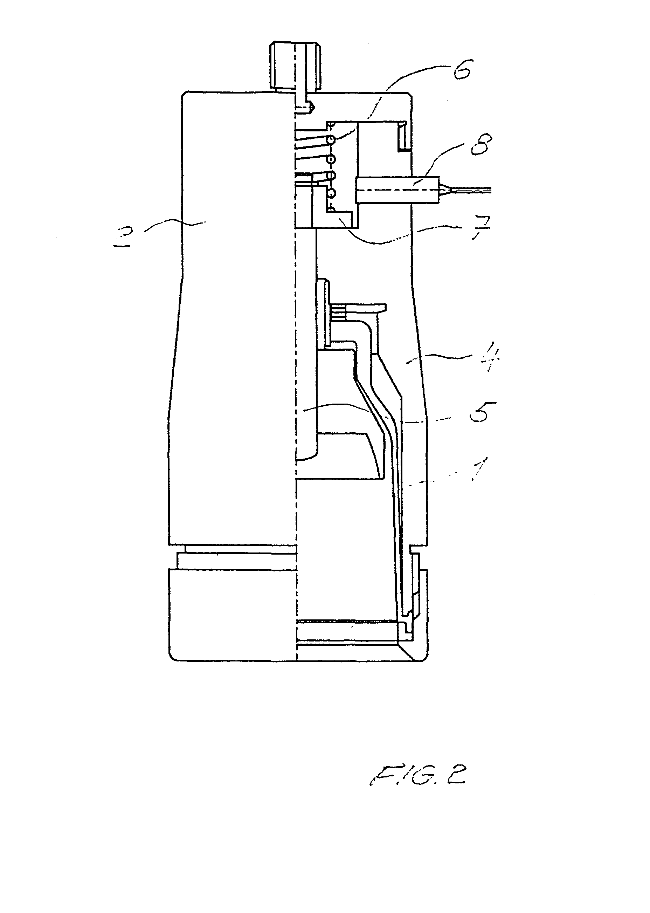

Figur 2 eine leere Greifertulpe.

Bei dem in der Zeichnung dargestellten Ausführungsbeispiel besteht die Gefäßumsetzmaschine, ausgebildet als Ein- oder Auspackmaschine für Flaschen aus nicht weiter dargestellten Greiferköpfen, an denen eine Vielzahl mit Greifereinheiten 1 ausgestattete Greifertulpen 2 zum Erfassen der einzelnen Flaschen 3 angeordnet sind. Dabei bestehen die Greifertulpen 2 aus einem Gehäuse 4, in dem mittig ein Taststift 5 in axialer Richtung gegen die Kraft einer Feder 6 höhenbeweglich gelagert ist. Der Taststift 5 weist eine Abtastfläche bzw. einen Steuerring 7 auf, die bzw. der mit einem im Gehäuse 4 und/oder an dem Greiferkopf angebrachten Sensor 8 während des Greifvorganges durch die umzusetzende Flasche 3 in Verbindung gebracht wird. Der Taststift 5 befindet sich dabei durch die einwirkende Federkraft in unterer Position. Sobald nun bei einem Absenkvorgang die Flaschen erreicht werden, berührt der Taststift 5 die Stirnseite 9 der Flaschen 3 und wird bei weiterer Absenkbewegung des Greiferkopfes nach oben bewegt, wobei er mit der Abtastfläche bzw. dem Steuerring 7 in den Bereich des Sensors 8 gelangt und auf diese Weise den Belegungszustand einer Steuereinheit vermittelt.

Sofern bei diesem Umsetzvorgang eine Flasche 3 nicht ergriffen wird, verbleibt der Taststift 5 in unterer Position, so daß auf einem Display oder in anderer Weise der Ort der fehlenden Flasche unmittelbar der Aufsichtsperson angezeigt wird. Diese kann dann durch den ausgelösten Maschinenstop, bzw. nach dem Absetzvorgang die entsprechende Flasche ergänzen.

In einer weiteren Ausgestaltung kann der Taststift an seinem flaschenseitigen Ende auch eine Tellerfläche aufweisen. Diese dient dann beim Aufsetzen auf den Flaschenhals als Erkennungsorgan für unterschiedliche Flaschenhöhen, so daß diese unmittelbar erkannt und ebenfalls von dem Sensor signalmäßig an die Steuereinheit zur weiteren Auswertung geleitet werden können.

## Patentansprüche

1. Gefäßumsetzmaschine, wie Ein- und Auspackmaschine für Flaschen mit einem oder mehreren Greiferköpfen, an denen mit Greifereinheiten ausgestattete Greifertulpen zum Erfassen der einzelnen Flaschen angeordnet sind, ***dadurch gekennzeichnet,* daß** die Greifertulpen (2) einen höhenbeweglichen Taststift (5) aufweisen und diesem ein Sensor (8) zugeordnet ist, dessen Signale auf eine zentrale Steuereinheit einwirken, die den höhenmäßigen Zustand der einzelnen Taststifte (5) ermittelt und entsprechende Veränderungen des höhenmäßigen Zustandes der einzelnen Taststifte (5) anzeigt.

2. Gefäßumsetzmaschine gemäß Anspruch 1, wobei die Greifertulpen aus einem tulpenförmigen Gehäuse mit einer darin angeordneten Greifereinheit zum Erfassen der Flaschen bestehen und einen innerhalb des Gehäuses in einer axialen Richtung durch die umzusetzende Flasche bewegbaren Taststift aufweisen, ***dadurch gekennzeichnet,* daß** der Taststift (5) eine Abtastfläche (7) aufweist, die mit einem im Gehäuse (4) und/oder Greiferkopf angebrachten Sensor (8) durch die umzusetzenden Flaschen in Verbindung bringbar ist.

3. Gefäßumsetzmaschine gemäß den Ansprüchen 1 oder 2, ***dadurch gekennzeichnet,* daß** der Taststift (5) in axialer Richtung gegen Federkraft im Gehäuse (4) beweglich gelagert ist und einen Steuerring aufweist, der in seiner oberen Position auf einen im Gehäusebereich angeordneten Sensor (8) einwirkt.

4. Gefäßumsetzmaschine gemäß den vorhergehenden Ansprüchen, ***dadurch gekennzeichnet,* daß** der Taststift an seinem flaschenseitigen Ende mit einer Tellerfläche ausgebildet ist, die auf unterschiedliche Flaschenhöhen anspricht.

## Claims

1. Vessel transposing machine, such as a packing and unpacking . machine for bottles, said machine having one or more gripper heads, on which are disposed tulip-shaped gripping devices, provided with gripper units, for gripping the individual bottles, **characterised in that** the tulip-shaped gripping devices (2) have a vertically displaceable feeler pin (5), and a sensor (8) is associated with said pin, the signals of said sensor acting on a central control unit which determines the vertical state of the individual feeler pins (5) and indicates corresponding changes in the vertical state of the individual feeler pins (5).

2. Vessel transposing machine according to claim 1, wherein the tulip-shaped gripping devices each comprise a tulip-shaped housing with a gripper unit disposed therein to grip the bottles, each having a feeler pin which is displaceable internally of the housing in an axial direction by the bottle to be transposed, **characterised in that** the feeler pin (5) has a scanning area (7) which can be brought to communicate with a sensor (8), which is mounted in the housing (4) and/or gripper head, by the bottles to be transposed.

3. Vessel transposing machine according to claims 1 or 2, **characterised in that** the feeler pin (5) is mounted (4) so as to be displaceable in the housing in an axial direction in opposition to spring force and has a control ring which, in its upper position, acts on a sensor (8) disposed in the housing region.

4. Vessel transposing machine according to the preceding claims, **characterised in that** the flange-side end of the feeler pin is provided with a plate-like area which responds to different bottle heights.

## Revendications

1. Machine pour déplacer des récipients, telle qu'une machine d'emballage ou de déballage de bouteilles, comprenant une ou plusieurs têtes preneuses, sur lesquelles sont prévues des tulipes preneuses, équipées d'unités de préhension, destinées à saisir les différentes bouteilles, ***caractérisée* en *ce que*** les tulipes preneuses (2) présentent un palpeur (5) susceptible d'effectuer un déplacement vertical, auquel est associé un capteur (8) dont les signaux agissent sur une unité centrale de commande qui indique la position en hauteur de chaque palpeur (5), ainsi que les variations de la position en hauteur de chaque palpeur (5).

2. Machine pour déplacer des récipients selon la revendication 1, dans laquelle les tulipes preneuses sont constituées par un carter en forme de tulipe pourvu d'une unité de préhension, située à l'intérieur, destinée à saisir des bouteilles, et présentent un palpeur susceptible d'être déplacé, à l'intérieur du carter, dans une direction axiale, par la bouteille qu'il convient de déplacer, ***caractérisée en ce que*** le palpeur (5) présente une surface d'exploration (7) susceptible d'être mise en liaison, par les bouteilles qu'il convient de déplacer, avec un capteur (8) monté dans le carter (4) et/ou dans la tête preneuse.

3. Machine pour déplacer des récipients selon les revendications 1 ou 2, ***caractérisée en ce que*** le palpeur (5) est monté mobile dans la direction axiale, dans le carter (4), à l'encontre d'une force élastique, et présente une bague de commande agissant, dans sa position haute, sur un capteur (8) disposé dans la zone du carter.

4. Machine pour déplacer des récipients selon les revendications précédentes, ***caractérisée en ce que*** le palpeur présente, à son extrémité située du côté de la bouteille, une surface en forme de disque qui réagit à différentes hauteurs de bouteilles.
